# EUROPÄISCHE PATENTSCHRIFT

(11) **EP 1 310 724 B1**
(45) Veröffentlichungstag und Bekanntmachung des Hinweises auf die Patenterteilung: **22.12.2004**
(21) Anmeldenummer: 02022053.9
(22) Anmeldetag: 02.10.2002
(51) Int. Cl.: F16L 41/08, E03F 3/04

(54) **Dichtring für den Einbau eines Anschlussstutzens in ein Rohr**
Sealing ring for mounting a connecting piece to a pipe
Joint d'étanchéité pour la mise en place d'un embout de raccordement sur un tuyau

(30) Priorität: 12.11.2001 DE 20118319 U
(43) Veröffentlichungstag der Anmeldung: 14.05.2003
(73) Patentinhaber: Steinzeug Abwassersysteme GmbH, 50858 Köln (DE)
(72) Erfinder: Peters, Peter, 41372 Niederkrüchten (DE)
(74) Vertreter: Patentanwälte Dr. Solf & Zapf

(56) Entgegenhaltungen:
- DE-A- 1 700 138
- DE-A- 2 402 022
- DE-A- 4 141 238
- DE-A- 19 817 638
- DE-U- 29 918 122
- US-A- 3 831 985

## Beschreibung

Die Erfindung betrifft einen Dichtring zum Abdichten einer Rohrverbindung beim Einbau eines Anschlußstutzens nach dem Anbohren des Hauptrohres.

Aus dem Steinzeug-Handbuch, S. 78, ist es bekannt, Anschlußstutzen an Hauptrohren anzubauen, wobei es sich hierbei üblicherweise um Anschlußstutzen zum Einbau in Abwasserrohre aus Steinzeug und Beton handelt. Zum Einbau eines derartigen Anschlußstutzens wird eine kreisrunde Öffnung in das Hauptrohr hineingeschnitten, wobei die kreisrunde Öffnung eine größere Weite als das Anschlußstutzenrohr hat. Anschließend wird ein sog. Bohrring als Dichtring in die kreisrunde Öffnung eingesetzt, wobei der Bohrring einen hohlzylindrischen Hauptabschnitt aufweist, der einen Außendurchmesser besitzt, der dem der kreisrunden Öffnung entspricht, wobei rohraußenseitig eine nach außen überkragende Dichtlippe vorhanden ist. An der Innenseite besitzt der Bohrring eine umlaufende, im Querschnitt T-förmige Dichtlippe. Beim Einsetzen des Anschlußstutzens wird diese Dichtlippe umgebogen und liegt dann an dem Stutzen an.

Bei einem derartigen Dichtring ist von Nachteil, daß relativ hohe Einschubkräfte notwendig sind, um den Anschlußstutzen in das Hauptrohr einzuschieben. Ferner ist von Nachteil, daß der Dichtring einen zylindrischen Abschnitt aufweist, der teilbereichsweise in das Hauptrohr hineinragt und den Abwasserablauf behindern kann. Ferner hat sich herausgestellt, daß die Dichtlippengeometrie mit einer T-förmigen Dichtlippe mit einem an der Dichtung innen umlaufenden T-Steg, welcher sich zum Inneren hin T-förmig verbreitert, zum einen bezüglich der Dichtung nicht optimal ist, zum anderen aber auch bruchgefährdet ist.

Aufgabe der Erfindung ist es, einen Dichtring zu schaffen, der die vorstehenden Nachteile vermeidet und dabei eine verbesserte Dichtung ermöglicht, stabiler ist und geringere Einschubkräfte erfordert.

Die Aufgabe wird mit einem Dichtring mit den Merkmalen des Anspruchs 1 gelöst.

In einer bevorzugten Ausführungsform weist der Dichtring zwei nach innen radial vorstehende Dichtlippen auf, wobei sowohl der rohräußere und der rohrinnere Rand des Dichtrings als auch die außen umlaufende, nach außen vorstehende Dichtlippe von der Form her dem Rohr derart angepaßt sind, daß zum Rohrinneren kein Dichtungsteil vorsteht und am Rohräußeren die Dichtlippe an allen Stellen anliegt. Bei diesem Dichtring ist von Vorteil, daß diese neue Geometrie ein unkontrolliertes Verquetschen der Dichtung in der Hauptleitung verhindert sowie geringere Einsteckkräfte erfordert bei einer verbesserten Dichtleistung.

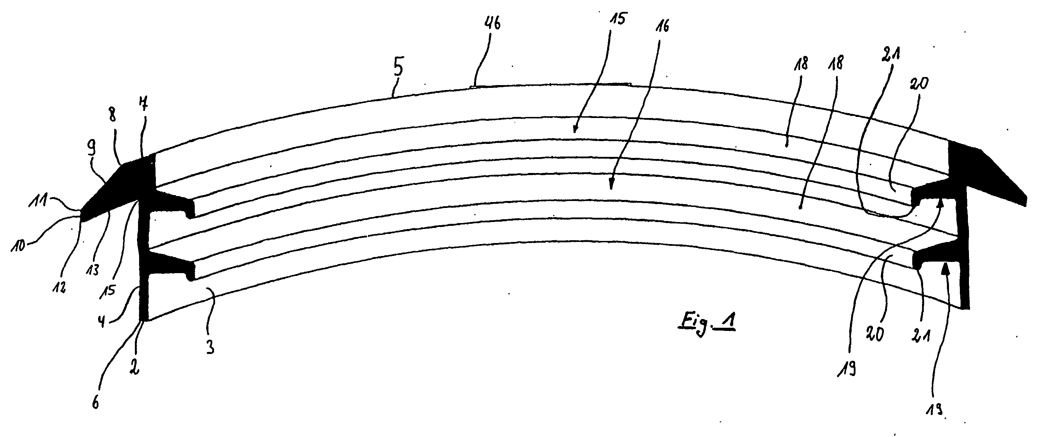

Die Erfindung wird anhand von Zeichnungen erläutert, es zeigen dabei
- Fig. 1: eine geschnittene perspektivische Ansicht eines erfindungsgemäßen Dichtrings;
- Fig. 2: einen Querschnitt durch den erfindungsgemäßen Dichtring nach Fig. 1;
- Fig. 3: eine Rohrstutzenanordnung in einer teilgeschnittenen Querschnittsdarstellung durch den Rohrstutzen mit montiertem erfindungsgemäßen Dichtring;
- Fig. 4: eine Anordnung entsprechend Fig. 3 in einer längsgeschnittenen Ansicht;
- Fig. 5: einen erfindungsgemäßen Dichtring in einer teilgeschnittenen Ansicht von oben mit einem Auflager für einen Rohrstutzen;
- Fig. 6: einen Dichtring nach dem Stand der Technik.

Ein erfindungsgemäßer Dichtring 1 ist vorzugsweise aus elastischem Kunststoff oder Gummi ausgebildet und besitzt einen kreisringförmigen Grundkörper 2 mit einer radialinneren Wandung 3 und einer radialäußeren Wandung 4 sowie einer äußeren Ringkante 5 sowie einer inneren Ringkante 6. Von der äußeren Ringkante 5 erstreckt sich über die radialäußere Wandung 4 hinaus dachartig eine äußere Abdecklippe 6a. Die Abdecklippe 6a läuft entlang der äußeren Ringkante 5 um den Grundkörper 2 um und ist vorzugsweise einstückig mit diesem ausgebildet.

Die Abdecklippe 6a besitzt in radialer Verlängerung der Kante 5 eine leicht nach außen abfallende Deckenfläche 7. Von einer Außenkante 8 der Deckenfläche 7 erstreckt sich stärker abfallend eine schräge Fläche 9 nach außen. Die Abdecklippe 6a schließt außenseitig mit einer umlaufenden schmalen Kreisringfläche bzw. Kreisringwandung 10 ab, die eine gemeinsame Kante 11 mit der schrägen Fläche 9 bildet. Gegenüber der Kante 11 ist eine Kante 12 gebildet, von der aus eine Bodenfläche 13 der Abdecklippe 6a schräg, die Abdecklippe 6a verjüngend, auf die äußere Wandung 4 zuläuft und mit dieser eine gemeinsame Kante 14 bildet.

An der radialinneren Wandung 3 sind zwei vorzugsweise gleichartig ausgebildete, sich radial nach innen erstreckende Dichtlippen 15, 16 ausgebildet. Die Dichtlippen 15, 16 sind als geschlossene Ringe ausgebildet. Eine Dichtlippe 15 erstreckt sich etwa auf Höhe der Kante 14 radial nach innen, die zweite Dichtlippe 16 ist zwischen der Ringkante 6 und der ersten Dichtlippe 15 angeordnet. Die Dichtlippen 15, 16 verjüngen sich von einem Anbindungsbereich 17 an den Grundkörper 2 radial nach innen, wobei jeweils eine Deckenwandung 18 und eine Bodenwandung 19 ausgebildet werden. Die Wandungen 18, 19 werden von einer gemeinsamen Stirnkante 20 verbunden. Die Stirnkanten 20 sind über die Bodenwandungen 19 hinaus verlängert ausgebildet, wodurch die Bodenwandung 19 und die Stirnkante 20 eine abgerundete Nase 21 bzw. einen Ringsteg 21 ausbilden.

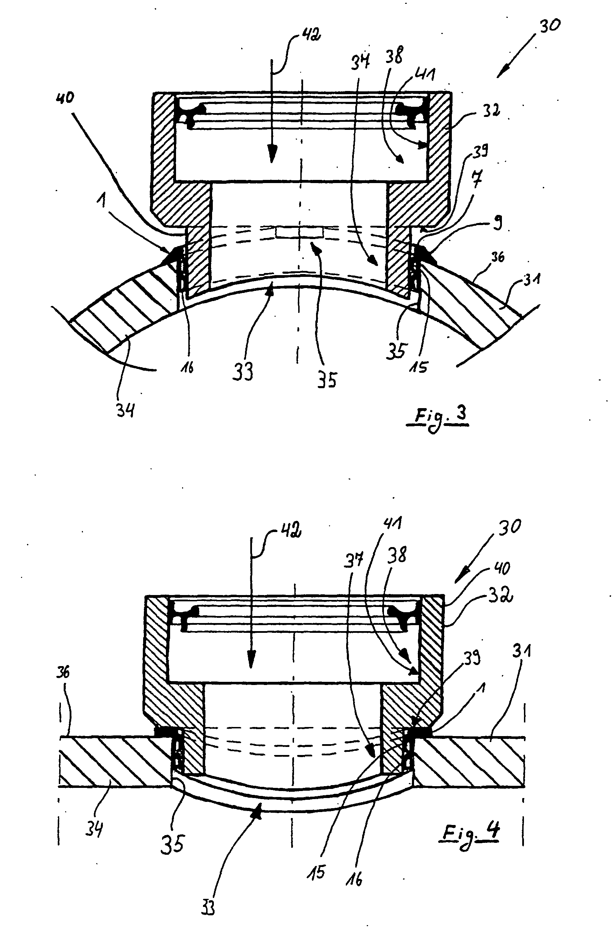

Eine Rohrverbindung 30 (Fig. 3, 4) mit dem erfindungsgemäßen Dichtring 1 besteht üblicherweise aus einem großen Hauptrohr 31 und einem z.B. radial ein- bzw. angesetzten Rohrstutzen 32.

Zur Aufnahme des Dichtringes 1 und des Rohrstutzens 32 besitzt das Hauptrohr 31 ein Kreisloch 33 bzw. eine Kreisbohrung 33 in der Mantelwandung 34. Das Loch 33 bzw. die Bohrung 33 wird von einer Wandung 35 begrenzt. Der Durchmesser der Bohrung 33 entspricht dem äußeren Durchmesser des Dichtringgrundkörpers 2. Der Dichtring 1 liegt mit der Wandung 13 der Abdecklippe 6a auf einer äußeren Wandung 36 des Hauptrohres 31 auf und mit der radialen äußeren Wandung 4 an der Wandung 35 an. In die vom Dichtring 1 radial nach innen begrenzte Öffnung ist der Rohrstutzen 32 eingeschoben angeordnet.

Der Rohrstutzen 32 ist im wesentlichen hohlzylindrisch ausgebildet mit einem engeren Einsteckbereich 37 und einem weiteren Rohraufnahmebereich 38, wobei sich der Rohrstutzen 32 vom Bereich 37 zum Bereich 38 mit einer Stufe 39 erweitert.

Der Rohrstutzen 32 besitzt eine äußere Zylindermantelwandung 40 und eine innere Zylindermantelwandung 41. Der Einsteckbereich 37 des Rohrstutzens 32 weist einen Außendurchmesser auf, der zwischen dem Innendurchmesser der radialinneren Wandung 3 des Grundkörpers 2 des Dichtrings 1 und dem von den Kanten 20 der Dichtlippen 15, 16 gebildeten Innendurchmesser liegt. In montiertem Zustand (Fig. 3, 4) liegen die Flächen 18 an der Zylindermantelwandung 40 an, wobei die Lippen in Einsteckrichtung 42 bogenförmig umgebogen sind. Die Nasen 21 stützen die Lippen vorzugsweise an der Wandung 3 ab und bilden einen elastisch federnden Balg, wobei die Flächen 18 zumindest teilbereichsweise mit Pressung an der Wandung 40 des Rohrstutzens 32 anliegen.

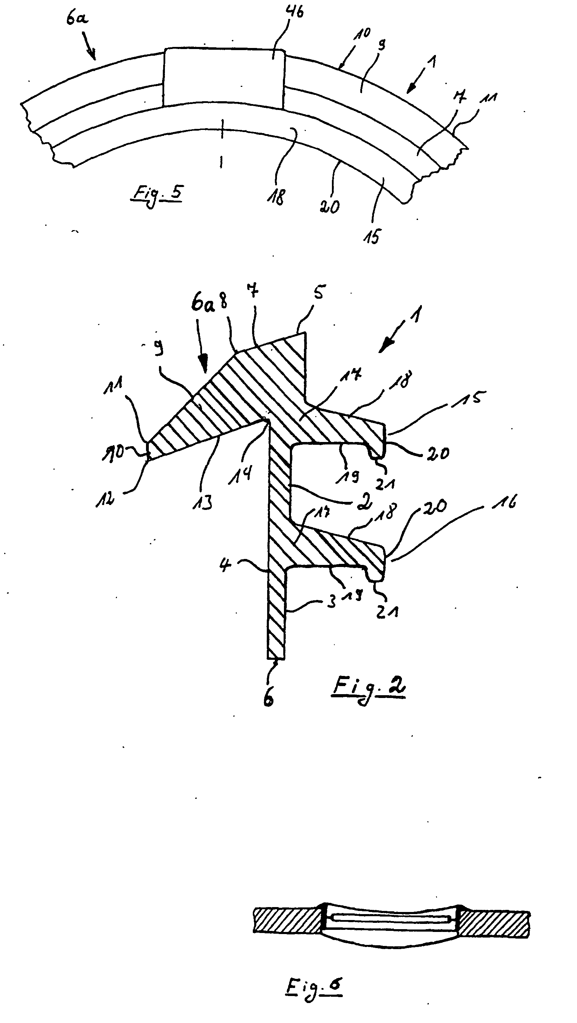

Im Scheitelbereich 45 des Hauptrohres 31, d.h. dem Bereich, in dem die Mantelwandung 34 des Hauptrohres und die Stufe 39 des Rohrstutzens 32 den geringsten Abstand voneinander aufweisen, ist die Abdecklippe 6a radial nach außen vorstehend quaderförmig ausgebildet, wodurch ein ebenes Auflager 46 (Fig. 5) für die Stufe 39 auf dem Hauptrohr gebildet ist.

Für die Montage der Rohrverbindung wird zunächst der Dichtring 1 in das Loch bzw. die Bohrung 33 eingelegt. Anschließend wird der Rohrstutzen 32 entsprechend der Einsteckrichtung 42 eingesteckt, wobei die Wandungen 18, 19 vorzugsweise mit einem Gleitmittel versehen werden. Durch das Einstecken des Rohrstutzens werden die Dichtlippen 15, 16 zum Hauptrohrinneren abgebogen. Hierbei stützen sich die Lippen 15, 16 mit den Nasen 21 gegen die Wandung 3 ab, so daß die eingeleiteten Druckkräfte verteilt werden können.

Bei der Erfindung ist von Vorteil, daß die Dichtlippen mit einer hohen Anpreßkraft am Rohrstutzen anliegen und hierdurch die Rohrstutzen gut stabilisiert und abgedichtet werden, wobei Ausweichbewegungen dennoch möglich sind. Es hat sich ferner herausgestellt, daß vorteilhafterweise die Einschub- oder Einsteckkräfte für einen Rohrstutzen geringer sind. Durch die Auflager 46 wird ein optimaler Abstand zwischen dem Rohrstutzen und dem Hauptrohr sichergestellt und das direkte Aufliegen der Rohre aufeinander oder eine Quetschung der Abdecklippen ausgeschlossen. Ferner werden radiale Druckkräfte vom Stutzen auf das Hauptrohr sicher aufgenommen, aber auch bei Verkippen des Rohrstutzens das Hauptrohr gegen Beschädigung durch den Rohrstutzen geschützt. Dies ist insbesondere wichtig, wenn Hauptrohr und Rohrstutzen aus Keramik ausgebildet sind.

## Patentansprüche

1. Dichtring (1) für eine Rohrverbindung (30) zwischen einem Hauptrohr (31) und einem radial in das Hauptrohr (31) eingesetzen Rohr oder Rohrstutzen (32), wobei der Dichtring (1) einen zylindrischen Grundkörper (2) und eine von einer oberen Stirnkante (5) nach außen vorstehende Abdecklippe (6a) aufweist,
**dadurch gekennzeichnet , daß**
die Abdecklippe (6a) zwei sich gegenüberliegende, radial nach außen vorstehende Auflagerkörper (46) mit einer ebenen Auflagerfläche für den Rohrstutzen (32) aufweist.

2. Dichtring nach Anspruch 1,
**dadurch gekennzeichnet, daß**
die Auflagerkörper (46) im wesentlichen quaderförmig ausgebildet sind.

3. Dichtring nach Anspruch 1,
**dadurch gekennzeichnet, daß**
die Auflagerkörper (46) hauptrohrseitig eine Einwölbung derart aufweisen, daß sie der Wölbung des Hauptrohres angepaßt sind.

4. Dichtring nach einem der vorhergehenden Ansprüche,
**dadurch gekennzeichnet, daß**
sich von einer inneren Wandung (3) des Grundkörpers (2) zwei axial beabstandete ringartige Dichtlippen (15, 16) nach innen erstrecken.

5. Dichtring nach einem der vorhergehenden Ansprüche,
**dadurch gekennzeichnet, daß**
die Erstreckung der Dichtlippen (15, 16) in das Innere des zylindrischen Grundkörpers (2) derart gewählt ist, daß die Dichtlippen (15, 16) einen Durchmesser begrenzen, der geringer ist als der Durchmesser eines einzuschiebenden Rohrstutzens (32).

6. Dichtring nach einem der vorhergehenden Ansprüche,
**dadurch gekennzeichnet, daß**
der Dichtring (1) aus elastischem Kunststoff oder Gummi ausgebildet ist.

7. Dichtring nach einem der vorhergehenden Ansprüche,
**dadurch gekennzeichnet, daß**
der Dichtring (1) den kreisringförmigen zylindrischen Grundkörper (2) mit einer radialinneren Wandung (3) und einer radialäußeren Wandung (4) sowie der oberen äußeren Ringkante (5) sowie eine innere untere Ringkante (6) besitzt, wobei von der äußeren Ringkante (5) sich über die radialäußere Wandung (4) hinaus dachartig die äußere Abdecklippe (6) erstreckt, wobei die Abdecklippe (6) entlang der äußeren Ringkante (5) um den Grundkörper (2) umläuft und vorzugsweise einstückig mit diesem ausgebildet ist.

8. Dichtring nach einem der vorhergehenden Ansprüche,
**dadurch gekennzeichnet, daß**
die Abdecklippe (6) in radialer Verlängerung der Kante (5) eine leicht nach außen abfallende Deckenfläche (7) aufweist, wobei von einer Außenkante (8) der Deckenfläche (7) sich stärker abfallend eine schräge Fläche (9) nach außen erstreckt und die Abdecklippe (6) außenseitig mit einer umlaufenden schmalen Kreisringfläche bzw. Kreisringwandung (10) abschließt, welche eine gemeinsame Kante (11) mit der schrägen Fläche (9) bildet und gegenüber der Kante (11) eine Kante (12) gebildet ist, von der aus eine Bodenfläche (13) der Abdecklippe (6) schräg, die Abdecklippe (6) verjüngend, auf die äußere Wandung (4) zuläuft und mit dieser eine gemeinsame Kante (14) bildet.

9. Dichtring nach einem der vorhergehenden Ansprüche,
**dadurch gekennzeichnet, daß**
die Dichtlippen (15, 16) als geschlossene Ringe ausgebildet sind, wobei sich die Dichtlippen (15, 16) von einem Anbindungsbereich (17) an den Grundkörper (2) radial nach innen verjüngen, wobei jeweils eine Deckenwandung (18) und eine Bodenwandung (19) ausgebildet werden und die Wandungen (18, 19) von einer gemeinsamen Stirnkante (20) verbunden sind.

10. Dichtring nach einem der vorhergehenden Ansprüche,
**dadurch gekennzeichnet, daß**
die Stirnkanten (20) über die Bodenwandungen (19) hinaus verlängert ausgebildet sind, wodurch die Bodenwandung (19) und die Stirnkante (20) eine abgerundete Nase (21) ausbilden.

11. Dichtring nach einem der vorhergehenden Ansprüche,
**dadurch gekennzeichnet, daß**
sich die Dichtlippe (15) etwa auf Höhe der Kante (14) radial nach innen erstreckt und die zweite Dichtlippe (16) zwischen der Ringkante (6) und der ersten Dichtlippe (15) angeordnet ist.

12. Rohrverbindung (30) mit einem Dichtring (1) nach einem der vorhergehenden Ansprüche und einem Hauptrohr (31) und einem radial ein- bzw. angesetztem Rohrstutzen (32).

13. Rohrverbindung nach Anspruch 12,
**dadurch gekennzeichnet, daß**
zur Aufnahme des Dichtringes (1) und des Rohrstutzens (32) das Hauptrohr (31) ein Kreisloch (33) bzw. eine Kreisbohrung (33) in der Mantelwandung (34) aufweist, wobei das Loch (33) bzw. die Bohrung (33) von einer Wandung (35) begrenzt wird und der Durchmesser der Bohrung (33) dem äußeren Durchmesser des Dichtringgrundkörpers (2) entspricht, wobei der Dichtring (1) mit der Wandung (13) der Abdecklippe (6) auf einer äußeren Wandung (36) des Hauptrohres aufliegt und mit der radialen äußeren Wandung (4) an der Wandung (35) anliegt, wobei in die vom Dichtring (1) radial nach innen begrenzte Öffnung der Rohrstutzen (32) eingeschoben angeordnet ist.

14. Rohrverbindung nach Anspruch 12 oder 13,
**dadurch gekennzeichnet, daß**
der Rohrstutzen (32) im wesentlichen hohlzylindrisch ausgebildet ist mit einem engeren Einsteckbereich (37) und einem weiteren Rohraufnahmebereich (38), wobei sich der Rohrstutzen (32) vom Bereich (37) zum Bereich (38) mit einer Stufe (39) erweitert.

15. Rohrverbindung nach einem der Ansprüche 12 bis 14,
**dadurch gekennzeichnet, daß**
der Rohrstutzen (32) eine äußere Zylindermantelwandung (40) und eine innere Zylindermantelwandung (41) aufweist, wobei der Einsteckbereich (37) einen Durchmesser besitzt, der zwischen dem Durchmesser des Dichtrings (1) bezogen auf die radialinnere Wandung (3) des Grundkörpers (2) und dem Durchmesser des Dichtrings (1) bezogen auf die Kanten (20) der Dichtlippen (15, 16) liegt.

16. Rohrverbindung nach einem der Ansprüche 12 bis 15,
**dadurch gekennzeichnet, daß**
im montierten Zustand die Flächen (18) an der Zylindermantelwandung (40) anliegen, wobei die Lippen in Einsteckrichtung (42) rundlich umgebogen sind.

17. Rohrverbindung nach einem der Ansprüche 12 bis 16,
**dadurch gekennzeichnet, daß**
sich die Nasen (21) in montiertem Zustand des Rohrstutzens (32) an der Wandung (3) abstützen, wodurch die Flächen (18) mit Pressung an der Wandung (40) des Rohrstutzens (32) anliegen.

18. Rohrverbindung nach einem der Ansprüche 12 bis 17,
**dadurch gekennzeichnet, daß**
im Scheitelbereich (45) des Hauptrohres (31), d.h. dem Bereich, in dem die Mantelwandung (34) des Hauptrohres und die Stufe (39) des Rohrstutzens (32) den geringsten Abstand voneinander aufweisen, die Abdecklippe (6) radial nach außen vorstehend quaderförmig ausgebildet ist, wodurch ein Auflager (46) für die Stufe (39) auf dem Hauptrohr (31) gebildet ist.

## Claims

1. Sealing ring (1) for a pipe connection (30) between a main pipe (31) and a pipe or pipe connection piece (32) inserted radially into the main pipe (31), the sealing ring (1) having a cylindrical basic body (2) and a covering lip (6a) projecting outwards from an upper end edge (5), **characterized in that** the covering lip (6a) has two mutually opposite radially outwardly projecting support bodies (46) with a plane support surface for the connection piece (32).

2. Sealing ring according to Claim 1, **characterized in that** the support bodies (46) are of essentially parallelepipedal design.

3. Sealing ring according to Claim 1, **characterized in that** the support bodies (46) have an inward curvature on the main-pipe side in such a way that they are adapted to the curvature of the main pipe.

4. Sealing ring according to one of the preceding claims, **characterized in that** two axially spaced ring-like sealing lips (15, 16) extend inwards from an inner wall (3) of the basic body (2).

5. Sealing ring according to one of the preceding claims, **characterized in that** the extent of the sealing lips (15, 16) into the interior of the cylindrical basic body (2) is selected in such a way that the sealing lips (15, 16) delimit a diameter which is smaller than the diameter of a connection piece (32) to be pushed in.

6. Sealing ring according to one of the preceding claims, **characterized in that** the sealing ring (1) is made from elastic synthetic material or rubber.

7. Sealing ring according to one of the preceding claims, **characterized in that** the sealing ring (1) has the circular-ring-shaped cylindrical basic body (2) with a radially inner wall (3) and a radially outer wall (4) and also the upper outer annular edge (5) and also an inner lower annular edge (6), the outer covering lip (6a) extending in a roof-like manner beyond the radially outer wall (4) from the outer annular edge (5), the covering lip (6a) running around the basic body (2) along the outer annular edge (5) and preferably being formed in one piece with this body.

8. Sealing ring according to one of the preceding claims, **characterized in that** the covering lip (6a) has, in radial prolongation of the edge (5), a gently outwardly descending top surface (7), an inclined surface (9), descending more steeply, extending outwards from an outer edge (8) of the top surface (7), and the covering lip (6a) ending on the outside with a narrow circular-ring-shaped surface or circular-ring-shaped wall (10) running around it, which forms a common edge (11) with the inclined surface (9), and an edge (12), from which a bottom surface (13) of the covering lip (6a) runs obliquely, tapering the covering lip (6a), towards the outer wall (4) and forms a common edge (14) with this wall, being formed opposite the edge (11).

9. Sealing ring according to one of the preceding claims, **characterized in that** the sealing lips (15, 16) are designed as closed rings, the sealing lips (15, 16) tapering radially inwards from a region of attachment (17) to the basic body (2), in each case a top wall (18) and a bottom wall (19) being formed and the walls (18, 19) being connected by a common end edge (20).

10. Sealing ring according to one of the preceding claims, **characterized in that** the end edges (20) are designed to extend beyond the bottom walls (19), as a result of which the bottom wall (19) and the end edge (20) form a rounded nose (21).

11. Sealing ring according to one of the preceding claims, **characterized in that** the sealing lip (15) extends radially inwards roughly at the level of the edge (14) and the second sealing lip (16) is arranged between the annular edge (6) and the first sealing lip (15).

12. Pipe connection (30) with a sealing ring (1) according to one of the preceding claims and a main pipe (31) and a radially inserted or attached connection piece (32).

13. Pipe connection according to Claim 12, **characterized in that**, for receiving the sealing ring (1) and the connection piece (32), the main pipe (31) has a circular hole (33) or a circular bore (33) in the lateral wall (34), the hole (33) or the bore (33) being delimited by a wall (35) and the diameter of the bore (33) corresponding to the outer diameter of the sealing ring basic body (2), the sealing ring (1) lying with the wall (13) of the covering lip (6a) on an outer wall (36) of the main pipe and bearing with the radial outer wall (4) against the wall (35), the connection piece (32) being pushed into the opening delimited radially inwardly by the sealing ring (1).

14. Pipe connection according to Claim 12 or 13, **characterized in that** the connection piece (32) is of essentially hollow cylindrical design with a narrower insertion region (37) and a wider pipe-receiving region (38), the connection piece (32) widening from the region (37) to the region (38) with a step (39).

15. Pipe connection according to one of Claims 12 to 14, **characterized in that** the connection piece (32) has an outer lateral cylinder wall (40) and an inner lateral cylinder wall (41), the insertion region (37) having a diameter which lies between the diameter of the sealing ring (1) related to the radially inner wall (3) of the basic body (2) and the diameter of the sealing ring (1) related to the edges (20) of the sealing lips (15, 16).

16. Pipe connection according to one of Claims 12 to 15, **characterized in that**, in the mounted state, the surfaces (18) bear against the lateral cylinder wall (40), the lips being bent over roundly in the insertion direction (42).

17. Pipe connection according to one of Claims 12 to 16, **characterized in that** the noses (21) are supported against the wall (3) in the mounted state of the connection piece (32), as a result of which the surfaces (18) bear pressingly against the wall (40) of the connection piece (32).

18. Pipe connection according to one of Claims 12 to 17, **characterized in that**, in the vertex region (45) of the main pipe (31), that is to say the region in which the lateral wall (34) of the main pipe and the step (39) of the connection piece (32) have the smallest distance from one another, the covering lip (6a) is of radially outwardly projecting and parallelepipedal design, as a result of which a support (46) for the step (39) on the main pipe (31) is formed.

## Revendications

1. Bague d'étanchéité (1) pour une jonction de tuyaux (30) entre un tuyau principal (31) et un tuyau ou tubulure (32) inséré dans le sens radial dans le tuyau principal (31), la bague d'étanchéité (1) comportant un corps de base cylindrique (2) et une lèvre de recouvrement (6a) dépassant d'une arête frontale supérieure (5) vers l'extérieur, **caractérisée en ce que** la lèvre de recouvrement (6a) présente deux corps d'appui (46) opposés, dépassant vers l'extérieur dans le sens radial, avec une surface d'appui plane pour la tubulure (32).

2. Bague d'étanchéité selon la revendication 1, **caractérisée en ce que** les corps d'appui (46) ont une forme essentiellement parallélépipédique.

3. Bague d'étanchéité selon la revendication 1, **caractérisée en ce que** les corps d'appui (46) présentent une courbure du côté du tuyau principal, de telle manière qu'ils sont adaptés à la courbure du tuyau principal.

4. Bague d'étanchéité selon l'une des revendications précédentes, **caractérisée en ce que** deux lèvres d'étanchéité (15, 16) de forme annulaire, distantes l'une de l'autre dans le sens axial, s'étendent vers l'intérieur à partir d'une paroi intérieure (3) du corps de base (2).

5. Bague d'étanchéité selon l'une des revendications précédentes, **caractérisée en ce que** l'étendue des lèvres d'étanchéité (15, 16) à l'intérieur du corps de base cylindrique (2) est choisie de telle manière que les lèvres d'étanchéité (15,16) délimitent un diamètre qui est inférieur au diamètre d'une tubulure à emmancher (32).

6. Bague d'étanchéité selon l'une des revendications précédentes, **caractérisée en ce que** la bague d'étanchéité (1) est réalisée dans une matière plastique élastique ou en caoutchouc.

7. Bague d'étanchéité selon l'une des revendications précédentes, **caractérisée en ce que** la bague d'étanchéité (1) possède le corps de base cylindrique de forme annulaire (2) avec une paroi radiale intérieure (3) et une paroi radiale extérieure (4) et l'arête annulaire extérieure supérieure (5), ainsi qu'une arête annulaire inférieure intérieure (6), la lèvre de recouvrement extérieure (6) s'étendant en forme de toit à partir de l'arête annulaire extérieure (5) au-delà de la paroi radiale extérieure (5), la lèvre de recouvrement (6) entourant le corps de base (2) le long de l'arête annulaire extérieure (5) et étant réalisée de préférence d'un seul tenant avec le corps de base.

8. Bague d'étanchéité selon l'une des revendications précédentes, **caractérisée en ce que** la lèvre de recouvrement (6) présente, dans le prolongement radial de l'arête (5), une surface supérieure (7) tombant légèrement vers l'extérieur, une surface oblique (9) tombant plus fortement à partir d'une arête extérieure (8) de la surface supérieure (7) et s'étendant vers l'extérieur, et la lèvre de recouvrement (6) se terminant du côté extérieur par une surface ou paroi annulaire étroite circulaire (10) qui forme une arête commune (11) avec la surface oblique (9) et une arête (12) est formée face à l'arête (11), à partir de laquelle une surface inférieure (13) de la lèvre de recouvrement (6) arrive à l'oblique sur la paroi extérieure (4) en diminuant la lèvre de recouvrement (6) et forme avec ladite paroi extérieure une arête commune (14).

9. Bague d'étanchéité selon l'une des revendications précédentes, **caractérisée en ce que** les lèvres d'étanchéité (15, 16) sont formées comme des anneaux fermés, les lèvres d'étanchéité (15, 16) se rétrécissant à partir d'une zone de liaison (17) au corps de base vers l'intérieur dans le sens radial le long du corps de base (2), une paroi supérieure (18) et une paroi inférieure (19) étant formées et les parois (18, 19) étant reliées par une arête frontale commune (20).

10. Bague d'étanchéité selon l'une des revendications précédentes, **caractérisée en ce que** les arêtes frontales (20) sont formées prolongées au-delà des parois inférieures (19), la paroi inférieure (19) et l'arête frontale (20) formant un bec arrondi (21).

11. Bague d'étanchéité selon l'une des revendications précédentes, **caractérisée en ce que** la lèvre d'étanchéité (15) s'étend vers l'intérieur dans le sens radial à peu près à la hauteur de l'arête (14) et la deuxième lèvre d'étanchéité (16) est disposée entre l'arête annulaire (6) et la première lèvre d'étanchéité (15).

12. Jonction de tuyaux (30) avec une bague d'étanchéité selon l'une des revendications précédentes et un tuyau principal (31) et une tubulure introduite ou montée dans le sens radial (32).

13. Jonction de tuyaux selon la revendication 12, **caractérisée en ce que**, pour loger la bague d'étanchéité (1) et la tubulure (32), le tuyau principal (31) présente un trou circulaire (33) ou un orifice circulaire (33) dans la paroi latérale (34), le trou (33) ou l'orifice (33) étant limité par une paroi (35) et le diamètre de l'orifice (33) correspondant au diamètre extérieur du corps de base de la bague d'étanchéité (2), la bague d'étanchéité (1) reposant avec la paroi (13) de la lèvre de recouvrement (6) sur une paroi extérieure (36) du tuyau principal et reposant avec la paroi extérieure radiale (4) sur la paroi (35), la tubulure (32) étant introduite dans l'ouverture limitée vers l'intérieur dans le sens radial par la bague d'étanchéité (1).

14. Jonction de tuyaux selon la revendication 12 ou 13, **caractérisée en ce que** la tubulure (32) est essentiellement de forme cylindrique creuse avec une zone d'emmanchement plus étroite (37) et une zone de logement de tube (38) plus large, la tubulure (32) s'élargissant de la zone (37) à la zone (38) avec un gradin (39).

15. Jonction de tuyaux selon l'une des revendications 12 à 14, **caractérisée en ce que** la tubulure (32) présente une paroi latérale cylindrique extérieure (40) et une paroi latérale cylindrique intérieure (41), la zone d'emmanchement (37) possédant un diamètre qui est situé entre le diamètre de la bague d'étanchéité (1) rapporté à la paroi intérieure radiale (3) du corps de base (2) et le diamètre de la bague d'étanchéité (1) rapporté aux arêtes (20) des lèvres d'étanchéité (15, 16).

16. Raccord de tuyaux selon l'une des revendications 12 à 15, **caractérisé en ce que**, à l'état monté, les surfaces (18) reposent sur la paroi d'enveloppe cylindrique (40), les lèvres étant recourbées de manière arrondie dans la direction d'emmanchement (42).

17. Raccord de tuyaux selon l'une des revendications 12 à 16, **caractérisé en ce que** les becs (21) s'appuient sur la paroi (3) lorsque la tubulure (32) est montée, les surfaces (18) reposant ainsi avec pression contre la paroi (40) de la tubulure (32).

18. Raccord de tuyaux selon l'une des revendications 12 à 17, **caractérisé en ce que** dans la zone du sommet (45) du tuyau principal (31), c'est-à-dire la zone dans laquelle la paroi d'enveloppe (34) du tuyau principal et le gradin (39) de la tubulure (32) présentent l'écart le plus réduit l'un de l'autre, la lèvre de recouvrement (6) est en forme de parallélépipède dépassant vers l'extérieur, un appui (46) pour le gradin (39) étant ainsi formé sur le tuyau principal (31).
